(19)

Europäisches
Patentamt
European
Patent Office
Office européen
des brevets

(11) **EP 3 905 069 A2**

(12) **EUROPEAN PATENT APPLICATION**

(43) Date of publication:
**03.11.2021  Bulletin 2021/44**

(51) Int Cl.:
***G06F 16/9535*** *(2019.01)*

(21) Application number: **21195823.6**

(22) Date of filing: **09.09.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.10.2020  CN 202011074769**

(71) Applicant: **Beijing Baidu Netcom
Science and Technology Co., Ltd.
Beijing 100085 (CN)**

(72) Inventors:
• **WANG, Zhaoxu
  Beijing, 100085 (CN)**

• **QIN, Shouke
  Beijing, 100085 (CN)**
• **PENG, Zhiming
  Beijing, 100085 (CN)**
• **SONG, Naifei
  Beijing, 100085 (CN)**
• **HU, Xiaoyu
  Beijing, 100085 (CN)**
• **CUI, Ningxin
  Beijing, 100085 (CN)**

(74) Representative: **Carangelo, Pierluigi et al
Jacobacci & Partners S.p.A.
Via Tomacelli 146
00186 Roma (IT)**

(54) **RESOURCE RECOMMENDATION METHOD AND APPARATUS, PARAMETER
DETERMINATION METHOD AND APPARATUS, DEVICE, AND MEDIUM**

(57)     Provided are a resource recommendation method and apparatus, a parameter determination method and apparatus, a device, and a medium. The specific implementation is as follows: determining a recommendation reference characteristic of a target user; and determining a resource recommendation result for the target user according to the recommendation reference characteristic of the target user and based on at least two resource recommendation models; where at least two recommendation strategy parameters in the at least two resource recommendation models are jointly determined according to recommendation behavior data of a historical user, and a resource processing stage associated with each of the at least two resource recommendation models is different.

**FIG. 4A**

**Description**

TECHNICAL FIELD

The present application relates to the technical field of data processing, in particular, to intelligent search and recommendation technologies, and, specifically, to a resource recommendation method and apparatus, a parameter determination method and apparatus, a device, and a medium.

BACKGROUND

The in-depth development of mobile Internet has laid a foundation for the wide application of resource recommendation systems. In real life, resource recommendation systems are applied to many applications, such as trip applications, shopping applications, video applications, news applications, and social applications, so as to provide users with more information that users are interested in or to facilitate users to quickly search for information that they are interested in.

However, the existing resource recommendation system suffers from poor recommendation results and poor user experience when performing resource recommendation.

SUMMARY

The present application provides a resource recommendation method and apparatus, which can provide better resource recommendation results, a parameter determination method and apparatus, a device, and a medium.

According to an aspect of the present application, a resource recommendation method is provided. The method includes the steps described below.

A recommendation reference characteristic of a target user is determined.

A resource recommendation result is determined for the target user according to the recommendation reference characteristic of the target user and based on at least two resource recommendation models.

At least two recommendation strategy parameters in the at least two resource recommendation models are jointly determined according to recommendation behavior data of a historical user, and a resource processing stage associated with each of the at least two resource recommendation models is different.

According to another aspect of embodiments of the present application, a resource determination method is further provided. The method includes the steps described below.

Recommendation behavior data of a historical user is determined.

At least two recommendation strategy parameters are jointly determined according to the recommendation behavior data of the historical user.

The at least two recommendation strategy parameters are use parameters in at least two resource recommendation models, and a resource processing stage associated with each of the at least two resource recommendation models is different.

According to another aspect of the present application, a resource recommendation apparatus is further provided. The apparatus includes a recommendation reference characteristic determination module and a resource recommendation result determination module.

The recommendation reference characteristic determination module is configured to determine a recommendation reference characteristic of a target user.

The resource recommendation result determination module is configured to determine a resource recommendation result for the target user according to the recommendation reference characteristic of the target user and based on at least two resource recommendation models.

At least two recommendation strategy parameters in the at least two resource recommendation models are jointly determined according to recommendation behavior data of a historical user, and a resource processing stage associated with each of the at least two resource recommendation models is different.

According to another aspect of the present application, a resource determination apparatus is further provided. The apparatus includes a recommendation behavior data determination module and a recommendation strategy parameter determination module.

The recommendation behavior data determination module is configured to determine recommendation behavior data of a historical user.

The recommendation strategy parameter determination module is configured to jointly determine at least two recommendation strategy parameters according to the recommendation behavior data of the historical user.

The at least two recommendation strategy parameters are use parameters in at least two resource recommendation models, and a resource processing stage associated with each of the at least two resource recommendation models is different.

According to another aspect of the present application, an electronic device is further provided. The electronic device includes at least one processor, and a memory communicatively connected to the at least one processor.

The memory has instructions executable by the at least one processor stored thereon, and the instructions are executed by the at least one processor to cause the at least one processor to perform the resource recommendation method provided in any one of the embodiments of the present application and/or to perform the parameter determination method provided in any one of the embodiments of the present application.

According to another aspect of the present application, a non-transitory computer-readable storage medium having computer instructions stored thereon is further provided. The computer instructions are used for causing a computer to perform the resource recommendation method provided in any one of the embodiments of the present application and/or to perform the parameter determination method provided in any one of the embodiments of the present application.

According to the technologies of the present application, the matching degree between the resource recommendation result and the target user is improved.

It is to be understood that the content described in this part is neither intended to identify key or important features of embodiments of the present disclosure nor intended to limit the scope of the present disclosure. Other features of the present disclosure are easy to be understood from the description provided hereinafter.

BRIEF DESCRIPTION OF DRAWINGS

The drawings are intended to provide a better understanding of the scheme of the present application and not to limit the present application. In the drawings:

FIG. 1 is a flowchart of a resource recommendation method according to an embodiment of the present application;

FIG. 2 is a flowchart of a parameter determination method according to an embodiment of the present application;

FIG. 3 is a flowchart of another parameter determination method according to an embodiment of the present application;

FIG. 4A is a structural diagram of a resource recommendation system according to an embodiment of the present application;

FIG. 4B is a structural block diagram of an online recommendation system according to an embodiment of the present application;

FIG. 4C is a structural diagram of a parameter optimization model according to an embodiment of the present application;

FIG. 4D is a flowchart of another resource recommendation method according to an embodiment of the present application;

FIG. 5 is a structural diagram of a resource recommendation apparatus according to an embodiment of the present application;

FIG. 6 is a structural diagram of a parameter determination apparatus according to an embodiment of the present application; and

FIG. 7 is a block diagram of an electronic device for implementing the resource recommendation method and/or the parameter determination method in the embodiments of the present application.

DETAILED DESCRIPTION

Exemplary embodiments of the present application, including details of embodiments of the present application, are described hereinafter in conjunction with the drawings to facilitate understanding. The exemplary embodiments are merely illustrative. Therefore, it will be realized by those having ordinary skill in the art that various changes and modifications may be made to the embodiments described herein without departing from the scope and spirit of the present application. Similarly, description of well-known functions and constructions is omitted hereinafter for clarity and conciseness.

Each of the resource recommendation methods disclosed in the embodiments of the present application is suitable for the case of recommending resources to a target user through a resource recommendation system in the technical field of data processing. The resource recommendation method disclosed in the embodiment of the present application may be performed by a resource recommendation apparatus. The apparatus is implemented by software and/or hardware and specifically disposed in an electronic device having a resource recommendation function.

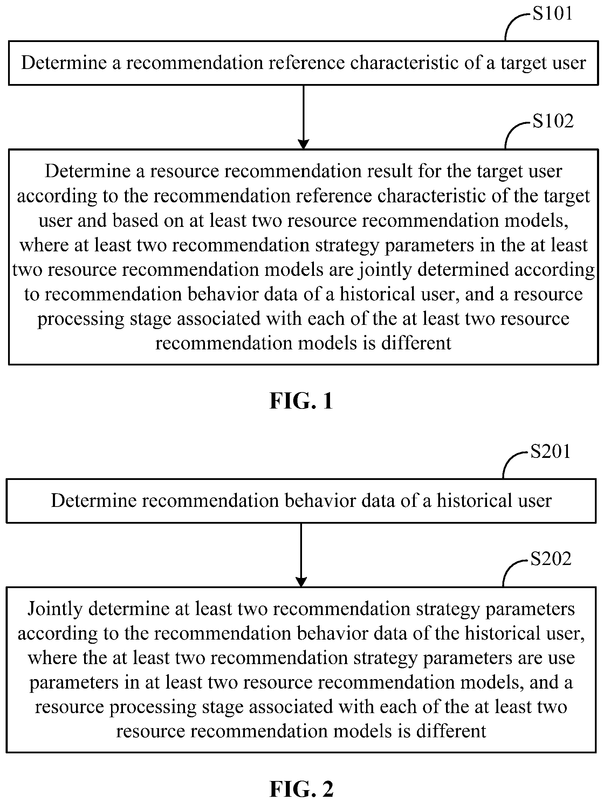

FIG. 1 is a flowchart of a resource recommendation method according to an embodiment of the present application. The method includes the steps described below.

In step S101, a recommendation reference characteristic of a target user is determined.

The target user may be understood as a user to be recommended for the resource recommendation.

The recommendation reference characteristic may be understood as characteristic data serving as a basis in the resource recommendation process. For example, the recommendation reference characteristic may include at least one of a scenario characteristic, a user basic characteristic, or a user preference characteristic.

For example, the scenario characteristic is used for characterizing scenario state data when the resource recommendation is performed on the target user, and may include, for example, at least one of the following: the number of refreshes, a refresh state, a refresh magnitude, a network state or a refresh time period. It is to be understood that with the introduction of the scenario characteristic into the recommendation reference characteristic, different to-be-recommended resources may be recommended to the target user in different scenarios in the subsequent resource recommendation, thereby achieving the purpose of personalized recommendation based on scenarios.

For example, the user basic characteristic is used for characterizing basic attributes of the user, and may include, for example, at least one of user's gender, age, education background, user activation or a user historical liking proportion. It is to be understood that with the introduction of the user characteristic into the recommendation reference characteristic, the personalized recommendation based on the target user can be achieved in the subsequent resource recommendation, thereby improving the matching degree between the resource recommendation result and the target user and further improving the user satisfaction.

For example, the user preference characteristic is used for characterizing a degree of preference of the target user for different categories of resource content in different types of resources. It is to be understood that with the introduction of the user preference characteristic into the recommendation reference characteristic, the content of interest may be recommended to the target user in the subsequent resource recommendation, thereby improving the user satisfaction.

Optionally, the recommendation reference characteristic of the target user may be pre-stored in an electronic device locally or in other storage devices or clouds associated with the electronic device. Accordingly, when the resource recommendation needs to be performed, the recommendation reference characteristic of the target user is acquired from the electronic device locally or from other storage devices or clouds associated with the electronic device according to identification information of the target user.

Alternatively, optionally, recommendation reference data may be pre-stored in an electronic device locally or in other storage devices or clouds associated with the electronic device. Accordingly, when the resource recommendation needs to be performed, recommendation reference data of the target user is read from the electronic device locally or from other storage devices or clouds associated with the electronic device according to identification information of the target user, and then characteristic extraction is performed on the recommendation reference data to generate recommendation reference characteristic represented in a structured form. The recommendation reference characteristic of the target user includes, but is not limited to, data such as a scenario characteristic, a user basic characteristic, and a user preference characteristic.

In step S102, a resource recommendation result is determined for the target user according to the recommendation reference characteristic of the target user and based on at least two resource recommendation models, where at least two recommendation strategy parameters in the at least two resource recommendation models are jointly determined according to recommendation behavior data of a historical user, and a resource processing stage associated with each of the at least two resource recommendation models is different.

The at least two resource recommendation models involved in the embodiment of the present application may form a resource recommendation system which is configured to recommend resources to the target user in a manner of cascading resource recommendation models of different resource processing stages. One of the at least two resource recommendation models is used for selecting resources from to-be-recommended resources or from output results of a previous cascaded resource recommendation model, and taking the selected resources as inputs of a next cascaded resource recommendation model, or presenting the selected resources as resource recommendation results to the target user.

In an embodiment, the resource processing stages include, but are not limited to, a resource recall stage, a resource rough arrangement stage, a resource fine arrangement stage, and a resource rearrangement stage. Accordingly, the resource recommendation models include, but are not limited to, a resource recall model, a resource rough arrangement model, a resource fine arrangement model, and a resource rearrangement model. It is to be noted that, for the preceding resource recommendation system, resource recommendation stages and corresponding resource recommendation models may be added, deleted or adjusted as required. Of course, according to actual requirements, at least one resource processing stage may be set to include at least one sub-stage. For example, the resource rearrangement stage may include a candidate resource sequence generation stage and a target resource sequence generation stage.

In the embodiment of the present application, each resource recommendation model uses at least one recommendation strategy for restricting recommendation results of the resource recommendation model. Accordingly, each recommendation strategy includes at least one recommendation strategy parameter. Different recommendation strategy parameters may affect the recommendation performance of the corresponding resource recommendation model.

In an optional embodiment, the recommendation strategy includes, but is not limited to, a resource category proportion strategy, a resource content diversification strategy, and a multi-recommendation-index equilibrium strategy. Accordingly, the recommendation strategy parameters include, but are not limited to, a category proportion parameter, a diversification weight adjustment parameter, and a multi-recommendation-index fusion parameter.

Optionally, the resource category proportion strategy may be understood as a strategy of setting comprehensive recommendation of at least two types of resources when the resource recommendation is performed, thereby improving the satisfaction of users with resource recommendation results. For example, when information flow is recommended, resources such as photos and articles, video clips, and short videos will be comprehensively recommended. Accordingly, the use parameters in the resource category proportion strategy may be category proportion parameters.

Optionally, the resource content diversification strategy may be understood as a strategy of ensuring the diversity of recommended resource content provided by the same type of resources when the resource recommendation is performed, thereby avoiding the over-fitting caused by the singleness of resource content, improving the coverage of the same type of resources, and further improving the user experience and satisfaction. Accordingly, the use parameters in the resource content diversification strategy may be diversification weight adjustment parameters in a weight adjustment formula adopted for diversification. The diversification weight adjustment parameter is used for setting proportion weights of different resource content categories in the same type of resources. The weight adjustment formula may be determined by technicians according to requirements or experience, or repeatedly determined by performing a large number of tests.

Optionally, the multi-recommendation-index equilibrium strategy refers to a strategy of how to meet requirements of different resource recommendation indexes when the resource recommendation is performed. For example, the recommendation index may include at least one of a click rate, a landing page duration, a list page duration, comments, likes, or share. Since different resource recommendation indexes may be restricted by each other, the influence between different recommendation indexes may be balanced by balancing multiple recommendation indexes. Accordingly, the use parameters of the multi-recommendation-index equilibrium strategy may be multi-recommendation-index fusion parameters of a fusion formula used in the multi-recommendation-index recommendation. The fusion formula may be determined by technicians according to requirements or experience, or repeatedly determined by performing a large number of tests.

In the embodiment, the recommendation reference characteristic of the target user is taken as input data of the first resource recommendation model in the resource recommendation system, output data of the first resource recommendation model is taken as input data of a next cascaded resource recommendation model, and finally, the resource recommendation result of the target user is outputted through the last resource recommendation model, so as to achieve the purpose of recommending resources to the target user.

The recommendation behavior data of a historical user may include, but is not limited to, a recommendation reference characteristic based on which resource recommendation is performed on the historical user, a resource recommendation result of the historical user, and behavior data when the historical user responds to the resource recommendation result.

It is to be understood that at least two resource recommendation models are determined according to the recommendation behavior data of the historical user so that the determined resource recommendation parameters can better adapt to the resource recommendation models. Meanwhile, according to the determination of the function of recommendation strategy parameters, the interaction between recommendation strategy parameters can be given consideration to, which lays a foundation for improving the accuracy of recommendation results of resource recommendation models.

In the embodiment of the present application, a recommendation reference characteristic of a target user is determined, and a resource recommendation result is determined for the target user according to the recommendation reference characteristic of the target user and based on at least two resource recommendation models, where at least two recommendation strategy parameters in the at least two resource recommendation models are jointly determined according to recommendation behavior data of a historical user, and a resource processing stage associated with each of the at least two resource recommendation models is different. In the preceding technical scheme, at least two recommendation strategy parameters in at least two resource recommendation models are jointly determined, so that dynamic determination and automatic adjustment of each recommendation strategy parameter in different resource processing stages can be achieved, and the problem of poor resource recommendation results caused by inaccuracy of artificially set parameters can be avoided. Meanwhile, with the joint determination of recommended strategy parameters, the problem of the mismatching of recommendation strategy parameters caused by the isolated determination of a single recommendation strategy parameter can be avoided, thereby giving consideration to the interaction between recommendation strategy parameters, further improving the accuracy of the resource recommendation result and the matching degree between the resource recommendation result and the target user, and improving the user satisfaction.

On the basis of the technical schemes of the preceding embodiments, the recommendation behavior data of the historical user may be refined into a recommendation reference characteristic of the historical user and user feedback data of the historical user, thereby completing the determination mechanism of resource recommendation parameters, that is, at least two recommendation strategy parameters are jointly determined according to the recommendation reference characteristic of the historical user and the user feedback data of the historical user. The at least two strategy recommendation parameters are use parameters of at least two resource recommendation models, and a resource processing stage associated with each of the at least two resource recommendation models is different.

It is to be noted that the electronic device (resource recommendation device) used in the process of resource recommendation and the electronic device (parameter determination device) used in the process of recommendation strategy parameter determination may be the same or different, which is not limited in the embodiments of the present application.

The user feedback data may be understood as data generated when the historical user responds to the resource recommendation result.

In an optional embodiment, the recommendation strategy parameter may be determined by using a parameter optimization model and based on the recommendation reference data of the historical user and the user feedback data of the historical user. The parameter optimization model may be implemented based on the Evolution Strategy (ES) algorithm or may be implemented by using other algorithms, which is not limited in the embodiments of the present application.

It is to be noted that the ES algorithm is an evolution strategy, which performs global optimization by simulating natural evolution and follows Darwin's theory of evolution by natural selection and survival of the fittest. Therefore, when the recommendation strategy parameter is determined by using the parameter optimization model implemented based on the ES algorithm, the process only depends on the user feedback data and does not depend on the back propagation of errors, thereby being suitable for the optimization process of each strategy parameter in a resource recommendation model containing multiple stages and multiple strategies. Meanwhile, the ES algorithm is simple and efficient in computation, can be highly parallel, has small resource loss, and thus can also improve the determination efficiency of the strategy parameters. Therefore, in a preferred embodiment, the recommendation strategy parameter may be determined by using the parameter optimization model implemented based on the ES algorithm.

In an optional implementation, network parameters in the parameter optimization model may be adjusted according to the user feedback data so that the model output results of the parameter optimization model have the physical meaning corresponding to the recommendation strategy parameter in the resource recommendation model. Meanwhile, the model output results are obtained by using the recommendation reference characteristic of the historical user and based on the adjusted parameter optimization model, so as to determine the recommendation strategy parameters, thereby improving the matching degree between the model output results (that is, recommendation strategy parameters) of the parameter optimization model and the resource recommendation models. Accordingly, the determined recommendation strategy parameters are applied to a corresponding resource recommendation model in the resource recommendation system to update the resource recommendation model, and then the resource recommendation is performed on the target user by using the updated resource recommendation model.

It is to be understood that the determination operation of the recommendation strategy parameters may be pre-performed, and the obtained recommendation strategy parameters are stored. Accordingly, when the resource recommendation model is used, recommendation strategy parameters are obtained from the storage area of the recommendation strategy parameters and then used.

In order to ensure the time-sensitive of the recommendation strategy parameters, generally, the user feedback data may be user feedback data determined after historical resources are recommended to a historical user within a set time period and before the resource recommendation is performed on the target user. Accordingly, the recommendation strategy parameters are re-determined in real time or regularly to update the recommendation strategy parameters in the resource recommendation model.

In the embodiment of the present application, with the introduction of the parameter determination model, the recommendation strategy parameters are determined, so that the joint optimization of strategy parameters is achieved and a single recommendation strategy parameter optimization in a single resource processing stage is not needed, thereby reducing the amount of data computation in the parameter optimization process, improving the determination efficiency of the recommendation strategy parameters, and providing the possibility for the online real-time update of each recommendation strategy parameter in the resource recommendation model. In addition, the interaction between different recommendation strategy parameters is comprehensively considered in the joint optimization process, thereby avoiding the instability of the resource recommendation system caused by the mutual restriction of strategy parameters in the isolated determination of a single recommendation strategy parameter. Meanwhile, with the introduction of the user feedback data of the historical user, the training process of the parameter optimization model is guided, so that the output results of the parameter optimization model have the physical meaning of recommendation strategy parameters, which lays a foundation for the joint optimization of recommendation strategy parameters. In addition, the strategy parameters are determined through the recommendation reference characteristic of the historical feedback user so that the data used in the recommendation strategy parameter determination process adapts to the data used when the resource recommendation is performed by using the resource recommendation model, thereby improving the matching degree between the finally determined recommendation strategy parameters and the resource recommendation models.

In order to further complete the determination mechanism of recommendation strategy parameters based on user feedback data, the generation process of the user feedback data is described in detail in an optional embodiment described below.

For example, the user feedback data may be determined by the resource recommendation device or the parameter determination device in the following manner: determining a response behavior data statistical value of the historical user to a historical resource recommendation result under each of traffic indexes, where the traffic indexes are indexes used by the resource recommendation models; and determining the user feedback data according to the response behavior data statistical value under each of the traffic indexes.

The traffic indexes may be understood as recommendation index requirements that need to be met in the resource recommendation. For example, the traffic index may be a recommendation index, including at least one of a click rate, a landing page duration, a list page duration, the number of comments, the number of likes, or the number of shares, or the recommendation index is determined based on at least one of the preceding parameters.

Optionally, the traffic indexes may include a time response index which is used for characterizing the response time of the resource recommendation system or the interaction time between the resource recommendation system and the historical user.

Optionally, the traffic indexes may include an interaction response index of an interaction behavior, which is used for characterizing the interaction of historical user on the resource recommendation result after the resource recommendation system performs resource recommendation.

Of course, the above only illustrates the content contained in the traffic indexes, and the traffic indexes may also be determined as other index parameters according to the actual traffic requirements of the resource recommendation system. Details are not described here.

For example, the response behavior data statistical value may include a duration accumulation value of duration response data. Alternatively, optionally, the response behavior data statistical value may include a frequency accumulation value of frequency parameters of the interaction response data.

In a specific implementation, if the traffic indexes include a time response index. Accordingly, the step of determining the user feedback data according to the response behavior data statistical value under each of the traffic indexes may be as follows: determining a total resource response duration according to a response behavior data statistical value under the time response index, and determining the user feedback data of each of historical users according to the total resource response duration.

It is be understood that the user feedback data is determined based on the response behavior data statistical value under the time response index, which may indirectly characterize the time viscosity of the historical user to the resource recommendation model. Therefore, the recommendation strategy parameters of the resource recommendation model is subsequently determined by using the user feedback data associated with the time viscosity so that the resource recommendation result can be closer to the time response index when the determined recommendation strategy parameters are applied to the resource recommendation system.

For example, a single refresh total duration of a historical user may be taken as the time response index. Accordingly, the sum of a landing page duration and a list page duration when the historical user performs a single refresh is taken as the total resource response duration, and the user feedback data is determined according to the total resource response duration. For example, the total resource response duration is directly taken as the user feedback data.

It is to be understood that in the resource recommendation system, with the introduction of the total resource response duration, the duration of a single refresh of a user becomes long enough, thereby improving the usage viscosity of the target user to an application program associated with the resource recommendation system. The resource recommendation system is a system constructed by at least two resource recommendation models associated with different resource processing stages.

In another specific implementation, if the traffic indexes include an interaction response index of at least one interaction behavior. Accordingly, the step of determining the user feedback data according to the response behavior data statistical value under each of the traffic indexes may be as follows: determining interaction response data according to the response behavior data statistical value under the interaction response index, and the user feedback data is determined according to the interaction response data. The interaction behavior may include at least one of clicking, refreshing, commenting, linking or sharing.

It is to be understood that the interaction response data determined based on the response behavior data statistical value under the interaction response index may indirectly characterize the interaction between the historical user and the resource recommendation system so that when the recommendation strategy parameters of the resource recommendation model are determined based on the user feedback data associated with the user interaction, and thus the resource recommendation result can be closer to the interaction response index when the determined recommendation strategy parameters are applied to the resource recommendation system.

For example, interaction response data may be determined based on at least one of the number of likes, the number of shares, the number of comments or the number of clicks and browses during a single refresh and according to a preset formula, and the determined interaction response data is directly used as the user feedback data. The preset formula is an increment formula with each of arguments. The arguments may include, but are not limited to, parameters such as the number of likes, the number of shares, the number of comments, and the number of clicks and browses.

It is to be understood that in the resource recommendation system, with the introduction of the interaction response data, when a user performs a single refresh on an application program associated with the resource recommendation system, the number of interactions of the user with the application program is large enough, thereby improving the liking of the user to the application program.

In another specific implementation, the traffic indexes may include a time response index and an interaction response index. There may be a certain restriction relationship between the time response index and the interaction response index. For example, in the resource recommendation system, the introduction of the total resource response duration ensures that the duration of a single refresh of the user is long enough, but there may be a case in which the resource duration of a single resource recommended by the system is too long; while the introduction of the interaction response data ensures that the number of interactions of the user in a single refresh is large enough, but there may be a case in which the duration of a single resource recommended by the system is too short. In addition, in the actual recommendation process, there is a case in which the actual resource browsing duration of the user is inconsistent with the total duration of a recommended resource when resource recommendation is performed. For example, when the user only browses part of recommended resources or only browses part of the content of a resource, the difference between the recommendation result and the actual browsing result of the user becomes large. In order to achieve the balance between the time response index and the interaction response index to ensure that the finally determined recommendation strategy parameters are more reasonable and thus to lay a foundation for the improvement of the user experience, the step of determining the user feedback data according to the response behavior data statistical value under each of the traffic indexes may also be as follows: determining a total resource response duration according to a response behavior data statistical value under the time response index; determining a duration correction amount according to a response behavior data statistical value under the interaction response index and a historical response duration; and determining user feedback data of each of historical users according to the duration correction amount and the total resource response duration.

The historical response duration is used for characterizing an average level of a total resource response duration in a set time period. The set time period may be determined by technicians according to requirements or empirical values, or repeatedly determined by performing a large number of tests. For example, the set time period may be a ratio of the total resource response duration of resources recommended to each of historical users to the total number of resources on the day before the resource recommendation is performed on the target user.

It is to be understood that with the introduction of the duration correction amount, the balance between the interaction response index and the time response index is achieved, thereby making the recommendation strategy parameters generated later more reasonable, laying a foundation for improving the recommendation performance of the resource recommendation system, and providing a guarantee for the improvement of the user experience.

For example, the sum of a landing page duration and a list page duration when the historical user performs a single refresh may be taken as the total resource response duration; the product of a statistical number of at least one interaction behavior and an average resource page duration is taken as the duration correction amount; and the sum of the total resource response duration and the duration correction amount is determined, and the sum is taken as the user feedback data to guide the subsequent determination of recommendation strategy parameters.

On the basis of the preceding technical schemes, in order to facilitate the reuse of the user feedback data, the user feedback data may be pre-stored locally in a parameter determination device, or in other storage devices or clouds associated with the parameter determination device. Accordingly, when resource recommendation is performed, the user feedback data is acquired from the parameter determination device locally, or from other storage devices or clouds associated with the parameter determination device, and then recommendation strategy parameters are determined according to the acquired user feedback data.

In the embodiment of the present application, with the introduction of the response behavior data statistical value of the historical user to the historical resource recommendation result, the user feedback data is determined, thereby completing the determination mechanism of the user feedback data. Meanwhile, the response behavior data statistical value is limited through traffic indexes so that the determined user feedback data can characterize traffic index requirements and thus the strategy recommendation parameters determined based on the user feedback data can be more matched with the traffic index requirements, thereby improving the matching degree between the determined recommendation strategy parameters and the resource recommendation system, laying a foundation for the improvement of the recommendation performance of the resource recommendation system, and providing a guarantee for the improvement of the user experience.

The specific implementation mode of the resource recommendation method is described in detail in the technical schemes of the preceding optional embodiments. For ease of understanding, the specific determination process of recommendation strategy parameters in the resource recommendation model involved in the resource recommendation method will be described in detail in the following optional embodiments. The parameter determination method provided in the embodiment may be performed by a parameter determination apparatus. The apparatus is implemented by software and/or hardware and specifically disposed in an electronic device having a parameter determination capability, that is, in a parameter determination device. It is to be noted that the parameter determination device may be a device the same as or different from the preceding resource recommendation device.

With reference to FIG. 2 which illustrates a parameter determination method, the method is applied to a parameter determination device and includes the steps described below.

In step S201, recommendation behavior data of a historical user is determined.

The recommendation behavior data of the historical user may include, but is not limited to, a recommendation reference characteristic based on which resource recommendation is performed on the historical user, a resource recommendation result of the historical user, and behavior data when the historical user responds to the resource recommendation result.

In step S202, at least two recommendation strategy parameters are jointly determined according to the recommendation behavior data of the historical user, where the at least two recommendation strategy parameters are use parameters in at least two resource recommendation models, and a resource processing stage associated with each of the at least two resource recommendation models is different.

The at least two resource recommendation models involved in the embodiment of the present application may form a resource recommendation system which is used for recommending resources to the target user in a manner of cascading resource recommendation models of different resource processing stages. One of the at least two resource recommendation models is used for selecting resources from to-be-recommended resources or from output results of a previous cascaded resource recommendation model, and taking the selected resources as inputs of a next cascaded resource recommendation model, or presenting the selected resources as resource recommendation results to the target user.

In an embodiment, the resource processing stages include, but are not limited to, a resource recall stage, a resource rough arrangement stage, a resource fine arrangement stage, and a resource rearrangement stage. Accordingly, the resource recommendation models include, but are not limited to, a resource recall model, a resource rough arrangement model, a resource fine arrangement model, and a resource rearrangement model. It is to be noted that, for the preceding resource recommendation system, resource recommendation stages and corresponding resource recommendation models may be added, deleted or adjusted as required. Of course, according to actual requirements, at least one resource processing stage may be set to include at least one sub-stage. For example, the resource rearrangement stage may include a candidate resource sequence generation stage and a target resource sequence generation stage.

In the embodiment of the present application, each resource recommendation model uses at least one recommendation strategy for restricting recommendation results of the resource recommendation model. Accordingly, each recommendation strategy includes at least one recommendation strategy parameter. Different recommendation strategy parameters may affect the recommendation performance of the corresponding resource recommendation model.

In an optional embodiment, the recommendation strategy includes, but is not limited to, a resource category proportion strategy, a resource content diversification strategy, and a multi-recommendation-index equilibrium strategy. Accordingly, the recommendation strategy parameters include, but are not limited to, a category proportion parameter, a diversification weight adjustment parameter, and a multi-recommendation-index fusion parameter.

Optionally, the resource category proportion strategy may be understood as a strategy of setting comprehensive recommendation of at least two types of resources when the resource recommendation is performed, thereby improving the satisfaction of users with resource recommendation results. For example, when information flow is recommended, resources such as photos and articles, video clips, and short videos will be comprehensively recommended. Accordingly, the use parameters in the resource category proportion strategy may be category proportion parameters.

Optionally, the resource content diversification strategy may be understood as a strategy of ensuring the diversity of recommended resource content provided by the same type of resources when the resource recommendation is performed, thereby avoiding the over-fitting caused by the singleness of resource content, improving the coverage of the same type of resources, and further improving the user experience and satisfaction. Accordingly, the use parameters in the resource content diversification strategy may be diversification weight adjustment parameters in a weight adjustment formula adopted for diversification. The diversification weight adjustment parameter is used for setting proportion weights of different resource content categories in the same type of resources. The weight adjustment formula may be determined by technicians according to requirements or experience, or repeatedly determined by performing a large number of tests.

Optionally, the multi-recommendation-index equilibrium strategy refers to a strategy of how to meet requirements of different resource recommendation indexes when the resource recommendation is performed. For example, the recommendation index may include at least one of a click rate, a landing page duration, a list page duration, comments, likes, or share. Since different resource recommendation indexes may be restricted by each other, the influence between different recommendation indexes may be balanced by balancing multiple recommendation indexes. Accordingly, the use parameters of the multi-recommendation-index equilibrium strategy may be multi-recommendation-index fusion parameters of a fusion formula used in the multi-recommendation-index recommendation. The fusion formula may be determined by technicians according to requirements or experience, or repeatedly determined by performing a large number of tests.

In the embodiment of the present application, recommendation behavior data of a historical user is determined, and at least two recommendation strategy parameters are jointly determined according to the recommendation behavior data of the historical user, where the at least two recommendation strategy parameters are use parameters in at least two resource recommendation models, and a resource processing stage associated with each of the at least two resource recommendation models is different. In the preceding technical scheme, at least two recommendation strategy parameters in at least two resource recommendation models are jointly determined, so that dynamic determination and automatic adjustment of each recommendation strategy parameter in different resource processing stages can be achieved, and the problem of poor resource recommendation results caused by inaccuracy of artificially set parameters can be avoided. Meanwhile, with the joint determination of recommendation strategy parameters, the problem of the mismatching of recommendation strategy parameters caused by the isolated determination of a single recommendation strategy parameter can be avoided, thereby giving consideration to the interaction between recommendation strategy parameters, further improving the accuracy of the resource recommendation result and the matching degree between the resource recommendation result and the target user, and improving the user satisfaction.

On the basis of the preceding technical schemes, in an optional embodiment, the recommendation behavior data of the historical user may be refined into a recommendation reference characteristic of the historical user and user feedback data of the historical user, and thus the recommendation strategy parameters are determined based on the recommendation reference characteristic of the historical user and the user feedback data of the historical user, thereby completing the determination mechanism of resource recommendation parameters.

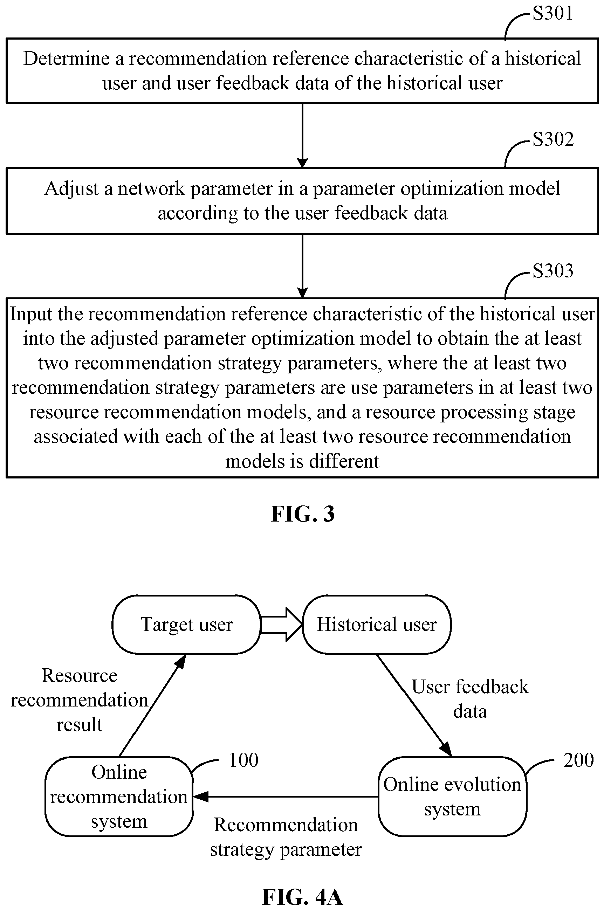

With reference to FIG. 3 which illustrates a parameter determination method, the method includes the steps described below.

In step S301, a recommendation reference characteristic of a historical user and user feedback data of the historical user are determined.

The recommendation reference characteristic may be understood as characteristic data serving as a basis in the resource recommendation process. For example, the recommendation reference characteristic may include, but is not limited to, at least one of a scenario characteristic, a user basic characteristic, or a user preference characteristic.

It is to be noted that the recommendation reference characteristic used in the parameter determination herein is consistent with the recommendation reference characteristic used in the determination of the resource recommendation result based on the resource recommendation model.

For example, the scenario characteristic is used for characterizing scenario state data when the resource recommendation is performed on the historical user, and may include, for example, at least one of the following: the number of refreshes, a refresh state, a refresh magnitude, a network state or a refresh time period. It is to be understood that with the introduction of the scenario characteristic into the recommendation reference characteristic, when the determined recommendation strategy parameters are applied to the resource recommendation models, the resource recommendation models have the capability to recommend different to-be-recommended resources to the target user in different scenarios, thereby achieving the purpose of personalized recommendation based on scenarios.

For example, the user basic characteristic is used for characterizing basic attributes of the user, and may include, for example, at least one of user's gender, age, education background, user activation or a user historical liking proportion. It is to be understood that with the introduction of the user characteristic into the recommendation reference characteristic, when the determined recommendation strategy parameters are applied to the resource recommendation models, the resource recommendation models have the capability to perform personalized recommendation based on the target user, thereby improving the matching degree between the resource recommendation result and the target user and further improving the user satisfaction.

For example, the user preference characteristic is used for characterizing a degree of preference of the target user for different categories of resource content in different types of resources. It is to be understood that with the introduction of the user preference characteristic into the recommendation reference characteristic, when the determined recommendation strategy parameters are applied to the resource recommendation models, the resource recommendation models have the capability to recommend content of interest to the target user, thereby improving the user satisfaction.

Optionally, the recommendation reference characteristic of the historical user may be pre-stored in an electronic device locally or in other storage devices or clouds associated with the electronic device. Accordingly, when the parameter determination needs to be performed, the recommendation reference characteristic of the historical user is acquired from the electronic device locally or from other storage devices or clouds associated with the electronic device according to identification information of the historical user.

Alternatively, optionally, recommendation reference data may be pre-stored in an electronic device locally or in other storage devices or clouds associated with the electronic device. Accordingly, when the resource recommendation needs to be performed, recommendation reference data of the historical user is read from the electronic device locally or from other storage devices or clouds associated with the electronic device according to identification information of the historical user, and then characteristic extraction is performed on the recommendation reference data to generate recommendation reference characteristic represented in a structured form. The recommendation reference characteristic includes, but is not limited to, data such as a scenario characteristic, a user basic characteristic, and a user preference characteristic.

The user feedback data may be understood as data generated when the historical user responds to the resource recommendation result.

For example, the user feedback data may be determined by the resource recommendation device or the parameter determination device in the following manner: determining a response behavior data statistical value of the historical user to a historical resource recommendation result under each of traffic indexes, where the traffic indexes are indexes used by the resource recommendation models; and determining the user feedback data according to the response behavior data statistical value under each of the traffic indexes.

The traffic indexes may be understood as recommendation index requirements that need to be met in the resource recommendation. For example, the traffic index may be a recommendation index, including at least one of a click rate, a landing page duration, a list page duration, the number of comments, the number of likes, or the number of shares, or the recommendation index is determined based on at least one of the preceding parameters.

Optionally, the traffic index may include a time response index which is used for characterizing the response time of the resource recommendation system or the interaction time between the resource recommendation system and the historical user.

Optionally, the traffic index may include an interaction response index of an interaction behavior, which is used for characterizing the interaction of historical user on the resource recommendation result after the resource recommendation system performs resource recommendation.

Of course, the above only illustrates the content contained in the traffic indexes, and the traffic indexes may also be determined as other index parameters according to the actual traffic requirements of the resource recommendation system. Details are not described here.

For example, the response behavior data statistical value may include a duration accumulation value of duration response data. Alternatively, optionally, the response behavior data statistical value may include a frequency accumulation value of frequency parameters of the interaction response data.

In a specific implementation, if the traffic indexes include a time response index. Accordingly, the step of determining the user feedback data according to the response behavior data statistical value under each of the traffic indexes may be as follows: determining a total resource response duration according to a response behavior data statistical value under the time response index, and determining the user feedback data of each of historical users according to the total resource response duration.

It is be understood that the user feedback data is determined based on the response behavior data statistical value under the time response index, which can indirectly characterize the time viscosity of the historical user to the resource recommendation model. Therefore, the recommendation strategy parameters of the resource recommendation model are subsequently determined by using the user feedback data associated with the time viscosity so that the resource recommendation result can be closer to the time response index when the determined recommendation strategy parameters are applied to the resource recommendation system.

For example, a single refresh total duration of a historical user may be taken as the time response index. Accordingly, the sum of a landing page duration and a list page duration when the historical user performs a single refresh is taken as the total resource response duration, and the user feedback data is determined according to the total resource response duration. For example, the total resource response duration is directly taken as the user feedback data.

It is to be understood that in the resource recommendation system, with the introduction of the total resource response duration, the duration of a single refresh of a user becomes long enough, thereby improving the usage viscosity of the target user to an application program associated with the resource recommendation system. The resource recommendation system is a system constructed by at least two resource recommendation models associated with different resource processing stages.

In another specific implementation, if the traffic indexes include an interaction response index of at least one interaction behavior. Accordingly, the step of determining the user feedback data according to the response behavior data statistical value under each of the traffic indexes may be as follows: determining interaction response data according to the response behavior data statistical value under the interaction response index, and the user feedback data is determined according to the interaction response data. The interaction behavior may include at least one of clicking, refreshing, commenting, linking or sharing.

It is to be understood that the interaction response data determined based on the response behavior data statistical value under the interaction response index may indirectly characterize the interaction between the historical user and the resource recommendation system so that when the recommendation strategy parameters of the resource recommendation model are determined based on the user feedback data associated with the user interaction, the resource recommendation result can be closer to the interaction response index when the determined recommendation strategy parameters are applied to the resource recommendation system.

For example, interaction response data may be determined based on at least one of the number of likes, the number of shares, the number of comments or the number of clicks and browses during a single refresh and according to a preset formula, and the determined interaction response data is directly used as the user feedback data. The preset formula is an increment formula with each of arguments. The arguments may include, but are not limited to, parameters such as the number of likes, the number of shares, the number of comments, and the number of clicks and browses.

It is to be understood that in the resource recommendation system, with the introduction of the interaction response data, when a user performs a single refresh on an application program associated with the resource recommendation system, the number of interactions of the user with the application program is large enough, thereby improving the liking of the user to the application program.

In another specific implementation, the traffic indexes may include a time response index and an interaction response index. There may be a certain restriction relationship between the time response index and the interaction response index. For example, in the resource recommendation system, the introduction of the total resource response duration ensures that the duration of a single refresh of the user is long enough, but there may be a case in which the resource duration of a single resource recommended by the system is too long; while the introduction of the interaction response data ensures that the number of interactions of the user in a single refresh is large enough, but there may be a case in which the duration of a unit resource recommended by the system is too short. In addition, in the actual recommendation process, there is a case in which the actual resource browsing duration of the user is inconsistent with the total duration of a recommended resource when resource recommendation is performed. For example, when the user only browses part of recommended resources or only browses part of the content of a resource, the difference between the recommendation result and the actual browsing result of the user becomes large. In order to achieve the balance between the time response index and the interaction response index to ensure that the finally determined recommendation strategy parameters are more reasonable and thus to lay a foundation for the improvement of the user experience, the step of determining the user feedback data according to the response behavior data statistical value under each of the traffic indexes may also be as follows: determining a total resource response duration according to a response behavior data statistical value under the time response index; determining a duration correction amount according to a response behavior data statistical value under the interaction response index and a historical response duration; and determining user feedback data of each of historical users according to the duration correction amount and the total resource response duration.

The historical response duration is used for characterizing an average level of a total resource response duration in a set time period. The set time period may be determined by technicians according to requirements or empirical values, or repeatedly determined by performing a large number of tests. For example, the set time period may be a ratio of the total resource response duration of resources recommended to each of historical users to the total number of resources on the day before the resource recommendation is performed on the target user.

It is to be understood that with the introduction of the duration correction amount, the balance between the interaction response index and the time response index is achieved, thereby making the recommendation strategy parameters generated later more reasonable, laying a foundation for improving the recommendation performance of the resource recommendation system, and providing a guarantee for the improvement of the user experience.

For example, the sum of a landing page duration and a list page duration when the historical user performs a single refresh may be taken as the total resource response duration; the product of a statistical number of at least one interaction behavior and an average resource page duration is taken as the duration correction amount; and the sum of the total resource response duration and the duration correction amount is determined, and the sum is taken as the user feedback data to guide the subsequent determination of recommendation strategy parameters.

On the basis of the preceding technical schemes, in order to facilitate the reuse of the user feedback data, the user feedback data may be pre-stored locally in a parameter determination device, or in other storage devices or clouds associated with the parameter determination device. Accordingly, when resource recommendation is performed, the user feedback data is acquired from the parameter determination device locally, or from other storage devices or clouds associated with the parameter determination device, and then recommendation strategy parameters are determined according to the acquired user feedback data.

It is to be noted that in the preceding technical scheme, with the introduction of the response behavior data statistical value of the historical user to the historical resource recommendation result, the user feedback data is determined, thereby completing the determination mechanism of the user feedback data. Meanwhile, the response behavior data statistical value is limited through traffic indexes so that the determined user feedback data can characterize traffic index requirements and thus the strategy recommendation parameters determined based on the user feedback data can be more matched with the traffic index requirements, thereby improving the matching degree between the determined recommendation strategy parameters and the resource recommendation system, laying a foundation for the improvement of the recommendation performance of the resource recommendation system, and providing a guarantee for the improvement of the user experience.

In step S032, a network parameter in a parameter optimization model is adjusted according to the user feedback data.

The parameter optimization model is implemented based on an ES algorithm or may be implemented by using other algorithms, which is not limited in the embodiments of the present application.

It is to be noted that the ES algorithm is an evolution strategy, which performs global optimization by simulating natural evolution and follows Darwin's theory of evolution by natural selection and survival of the fittest. Therefore, when the recommendation strategy parameter is determined by using the parameter optimization model implemented based on the ES algorithm, the process only depends on the user feedback data and does not depend on the back propagation of errors, thereby being suitable for the optimization process of each strategy parameter in a resource recommendation model containing multiple stages and multiple strategies. Meanwhile, the ES algorithm is simple and efficient in computation, can be highly parallel, has small resource loss, and thus can also improve the determination efficiency of the strategy parameters. Therefore, in a preferred embodiment, the recommendation strategy parameter may be determined by using the parameter optimization model implemented based on the ES algorithm.

In an optional implementation of the embodiment of the present application, the step of adjusting a network parameter in a parameter optimization model according to the user feedback data may be as follows: generating a disturbance data group according to account information of the historical user and time information of the historical user; determining a parameter adjustment step size according to the user feedback data and the disturbance data group; and adjusting the network parameter in the parameter optimization model according to the parameter adjustment step size.

The account information may be a login account of the historical user in the resource recommendation system, which is used for uniquely characterizing the user identity. The time information is used for characterizing a time period when the historical user uses the resource recommendation system. The unit of measurement of the time information may be set by technicians according to requirements. For example, hours may be used as the minimum unit of measurement.

In an optional implementation, the step of generating a disturbance data group according to account information of the historical user and time information of the historical user may be as follows: performing a hashing operation on the account information of the historical user and the time information of the historical user to obtain a random number seed, and generating the disturbance data group by using a distribution function and based on the random number seed. The number of disturbance data in the disturbance data group is the same as that in the strategy parameters, which is used for characterizing the random disturbance in different recommendation strategy parameters. The distribution function may be determined by technicians according to requirements or empirical values, or repeatedly determined by performing a large number of tests. For example, the distribution function may be a Gaussian distribution function.

It is to be noted that the resource recommendation system has pertinence and is time-sensitive. For example, the resource contents recommended to different users are different, the resource contents recommended to the same user in the same time period are similar, and the resource contents recommended to the same user in different time periods are also different. Therefore, since the account information and the time information of the historical user are introduced when the disturbance data group is generated, the generated random number seed has the same value for the same user in the same time period, the generated random number seed has different values for different users in the same time period, and the generated random number seed has different values for the same user in different time periods. Therefore, the disturbance data group generated based on the random number seed can better adapt to the resource recommendation system.

It is to be understood that in order to achieve the reuse of the random number seed, after random number seeds are generated for each of the historical users in different time periods, data including the random number seeds may also be stored for subsequent use.

Optionally, the hashing operation is performed on a login account, an account login date and account login time of the historical user to obtain the random number seed, and the disturbance data group is generated by using Gaussian distribution function and based on the random number seed.

In an optional embodiment, the step of determining a parameter adjustment step size according to the user feedback data and the disturbance data group may be as follows: determining an initial parameter adjustment step size according to the disturbance data group, and correcting the initial adjustment step size according to the user feedback data to obtain the final parameter adjustment step size.

In another optional embodiment, the step of determining a parameter adjustment step size according to the user feedback data and the disturbance data group may also be as follows: weighting each disturbance data in the disturbance data group according to the user feedback data to obtain disturbance enhancement data, and determining the parameter adjustment step size according to the disturbance enhancement data.

It is to be understood that with the introduction of the disturbance data group, the parameter adjustment step size is determined, and with the introduction of the user feedback data, the disturbance corresponding to each strategy parameter is strengthened or weakened so that the finally determined disturbance enhancement data better adapts to the strategy parameters currently adopted by the resource recommendation system, thereby laying a foundation for the accuracy and rationality of the parameter adjustment step size determined based on the disturbance enhancement data.

Optionally, the step of weighting each disturbance data in the disturbance data group according to the user feedback data to obtain disturbance enhancement data includes: standardizing the user feedback data according to historical feedback data of the historical user to update the user feedback data, and weighting each disturbance data in the disturbance data group according to the updated user feedback data to obtain the disturbance enhancement data.

For example, the step of standardizing the user feedback data according to historical feedback data of the historical user to update the user feedback data may be as follows: for each of historical feedback users, determining a historical feedback statistical value of the historical feedback user according to historical feedback data of the historical feedback user, and standardizing user feedback data of the historical feedback user according to the historical feedback statistical value of the historical feedback user to update the user feedback data.

For example, the step of standardizing the user feedback data according to historical feedback data of the historical user to update the user feedback data may be as follows: for each of historical feedback users, determining a feedback prediction value of the historical feedback user in a current time period according to historical feedback data of the historical feedback user, and standardizing user feedback data of the historical feedback user according to the feedback prediction value to update the user feedback data.

For example, the step of standardizing the user feedback data according to historical feedback data of the historical user to update the user feedback data may also be as follows: for each of historical feedback users, determining standard feedback data of the historical feedback user according to historical feedback data of the historical feedback user, and determining a difference between the user feedback data and the standard feedback data, and taking the difference as the updated user feedback data. The standard feedback data may be an average value in historical feedback statistical values or the feedback prediction value.

For example, the step of standardizing the user feedback data according to historical feedback data of the historical user to update the user feedback data may also be as follows: for each of historical feedback users, determining standard feedback data of the historical feedback user according to historical feedback data of the historical feedback user; determining a difference between the user feedback data and the standard feedback data, and determining a ratio of the determined difference to corresponding standard feedback data; and taking the ratio as the updated user feedback data. The standard feedback data may be an average value in historical feedback statistical values or the feedback prediction value.

Of course, in the embodiments of the present application, the user feedback data may be standardized by using other manners in the related art. Details are not described here.

It is to be noted that the user feedback data is standardized, which eliminates the significant difference of user feedback data caused by the closeness between each of different feedback users and the resource recommendation system, thereby avoiding the influence of user feedback data of abnormally active users and abnormally inactive users on the accuracy of disturbance enhancement data and the influence thereof on the accuracy of each of finally determined recommendation strategy parameters. The historical feedback statistical value may include at least one of a maximum value, a minimum value, an average value, a variance or a standard deviation.

In an embodiment, the determined parameter adjustment step size includes an adjustment amplitude and an adjustment direction. The adjustment amplitude is used for characterizing the magnitude of the numerical value of adjustment on the network parameter in the parameter optimization model. The adjustment direction is used for characterizing the positive adjustment or negative adjustment on the network parameter in the parameter optimization model. Generally, the adjustment direction is distinguished by a sign of plus or minus.

For example, the step of adjusting the network parameter in the parameter optimization model according to the parameter adjustment step size may be as follows: determining a sum of the parameter adjustment step size and a latest used network parameter in the parameter optimization model, and taking the determined sum as a new network parameter.

It is to be understood that the disturbance data group is generated according to the account information and the time information of the historical user, and then used for determining the parameter adjustment step size, and then the network parameter in the parameter optimization model is adjusted according to the parameter adjustment step size, thereby completing the adjustment mode of network parameters, providing a data support for the generation of strategy parameters, and laying a foundation for the improvement of the matching degree between strategy parameters and resource recommendation system.

In step S303, the recommendation reference characteristic of the historical user is inputted into the adjusted parameter optimization model to obtain at least two recommendation strategy parameters. The at least two recommendation strategy parameters are use parameters in at least two resource recommendation models, and a resource processing stage associated with each of the at least two resource recommendation models is different.

The parameter optimization model is used for determining the recommendation strategy parameters. The model input data of the parameter optimization model is the recommendation reference characteristic of the historical user. The model output data is recommendation strategy parameters in the resource recommendation model. The recommendation reference characteristic includes, but is not limited to, a scenario characteristic, a user basic characteristic, and a user preference characteristic. In order to ensure the matching degree between the recommendation strategy parameters and the resource recommendation model, preferably, the recommendation reference characteristic of the historical user adopted when parameters are determined corresponds to the data contained in the recommendation reference characteristic of the target user adopted in the resource recommendation model when the resource recommendation is performed, that is, their data types are consistent.

Specifically, the recommendation reference characteristic of the historical user is inputted into the adjusted parameter optimization model to obtain a new recommendation strategy parameter, and the new recommendation strategy parameter may be used in the resource recommendation models to recommend resources to the target user. Accordingly, the feedback of the target user to the resource recommendation result is obtained, and the user feedback data is determined based on the feedback to guide the subsequent adjustment process of the network parameter in the parameter optimization model, and these steps are repeated until a model training termination condition is met, and gradually, the strategy parameters having a high matching degree with the resource recommendation models are obtained.

In an optional implementation of the embodiment of the present application, the model training termination condition may be that the set number of pieces of training is reached or that the parameter optimization model tends to be stable.

It is to be noted that, since the resource recommendation system, when recommending resources, may be affected by many factors such as the performance of resources themselves and the recommendation environment, when the parameter optimization model tends to be stable, the parameter optimization model may be unstable again, and thus the matching degree between the recommendation strategy parameters determined by the corresponding parameter optimization model and each resource recommendation model in the resource recommendation system will also be reduced.

In order to reduce the influence of the preceding case on the recommendation performance of the resource recommendation model and to improve the satisfaction of users to the resource recommendation results, the parameter optimization model may continue to be trained after the parameter optimization model becomes stable. In the training process, the stability of the parameter optimization model is determined. If the fluctuation of the parameter optimization model is greater than a set threshold, which indicates that the parameter optimization model is unstable, the network parameter in the parameter optimization model needs to be adjusted continuously, and the recommendation strategy parameters are re-determined based on the adjusted parameter optimization model and then used. If the fluctuation of the parameter optimization model is not greater than the set threshold, which indicates that the parameter optimization model is relatively stable, the original network parameter is maintained, and the strategy parameters are re-determined based on the original parameter optimization model and then used. Alternatively, optionally, the parameter optimization model may be initialized periodically, that is, at least part of network parameters in the parameter optimization model are initialized after the use period of the parameter optimization model is reached, and then the initialized parameter optimization model is retrained in a corresponding use period. The set threshold and the use period may be determined by technicians according to requirements or empirical values, or repeatedly determined by performing a large number of tests.

In the embodiment of the present application, with the introduction of the parameter determination model, the recommendation strategy parameters are determined, so that the joint optimization of strategy parameters is achieved and the single recommendation strategy parameter optimization in the single resource processing stage is not needed, thereby reducing the amount of data computation in the parameter optimization process, improving the determination efficiency of the recommendation strategy parameters, and providing the possibility for the online real-time update of each recommendation strategy parameter in the resource recommendation model. In addition, the interaction between different recommendation strategy parameters is comprehensively considered in the joint optimization process, thereby avoiding the instability of the resource recommendation system caused by the mutual restriction of strategy parameters in the isolated determination of a single recommendation strategy parameter. Meanwhile, with the introduction of the user feedback data of the historical user, the training process of the parameter optimization model is guided, so that the output results of the parameter optimization model have the physical meaning of recommendation strategy parameters, which lays a foundation for the joint optimization of recommendation strategy parameters. In addition, the strategy parameters are determined through the recommendation reference characteristic of the historical feedback user so that the data used in the recommendation strategy parameter determination process is adapted to the data used when resources are recommended by using the resource recommendation model, thereby improving the matching degree between the finally determined recommendation strategy parameters and the resource recommendation models.

On the preceding technical schemes, the embodiments of the present application further provide a preferred embodiment. In order to clearly describe the technical schemes of the embodiment, the resource recommendation system involved in the embodiment of the present application is first described in detail.

With reference to FIG. 4A which illustrates a resource recommendation system, the resource recommendation system includes an online recommendation system 100 and an online evolution system 200. The online recommendation system 100 is provided with at least two cascaded resource recommendation models, and a resource processing stage of each of the at least two cascaded resource recommendation models is different. Each resource processing stage is used for selecting to-be-processed resources and feeding back the finally selected to-be-processed resources as resource recommendation results to a target user. The to-be-processed resources in the first resource recommendation model are to-be-recalled resources. The selection results of the last resource recommendation model are the resource recommendation results of the target user. The online evolution system 200 is provided with a parameter optimization model implemented based on the ES algorithm, and is used for jointly determining recommendation strategy parameters in the recommendation strategies adopted by the resource recommendation model group based on user feedback data of a historical user to resource recommendation results and applying the determined recommendation strategy parameters to each resource recommendation model set in the online recommendation system for recommending resources to a new target user.

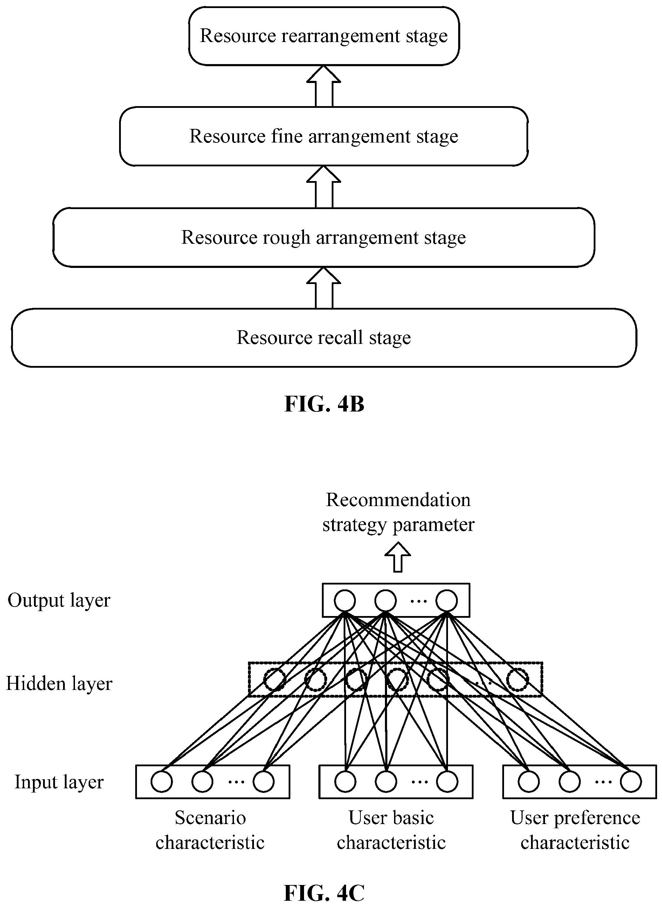

With reference to FIG. 4b, a structural block diagram of an online recommendation system is illustrated. The online recommendation system is presented as a funnel-shaped architecture, including four resource processing stages: resource recall stage, resource rough arrangement stage, resource fine arrangement stage, and resource rearrangement stage. Accordingly, the resource recommendation models include a resource recall model, a resource rough arrangement model, a resource fine arrangement model, and a resource rearrangement model. Each resource processing stage may be provided with at least one sub-stage as required. For example, the resource rearrangement stage may be set to include a candidate resource sequence generation sub-stage and a target resource sequence generation sub-stage.

The resource recommendation model in each of the preceding resource processing stages adopts at least one recommendation strategy to restrict the resource recommendation process. The at least one recommendation strategy includes, but is not limited to, a resource category proportion strategy, a resource content diversification strategy, and a multi-recommendation-index equilibrium strategy.

The resource category proportion strategy may be understood as a strategy of setting comprehensive recommendation of at least two types of resources when the resource recommendation is performed, thereby improving the satisfaction of users with resource recommendation results. For example, when information flow is recommended, resources such as photos and articles, video clips, and short videos will be comprehensively recommended. Accordingly, the use parameters in the resource category proportion strategy may be resource proportion parameters.

The resource content diversification strategy may be understood as a strategy of ensuring the diversity of recommended resource content provided by the same type of resources when the resource recommendation is performed, thereby avoiding the over-fitting caused by the singleness of resource content, improving the coverage of the same type of resources, and further improving the user experience and satisfaction. Accordingly, the use parameters in the resource content diversification strategy may be diversification weight adjustment parameters in a weight adjustment formula adopted for diversification. The weight adjustment parameter is used for setting proportion weights of different resource content categories in the same type of resources. The weight adjustment formula may be determined by technicians according to requirements or experience, or repeatedly determined by performing a large number of tests.

The multi-recommendation-index equilibrium strategy refers to a strategy of how to meet requirements of different resource recommendation indexes when the resource recommendation is performed. For example, the recommendation index may include at least one of a click rate, a landing page duration, a list page duration, comments, likes, or share. Since different resource recommendation indexes may be restricted by each other, the influence between different recommendation indexes may be balanced by balancing multiple recommendation indexes. Accordingly, the use parameters of the multi-recommendation-index equilibrium strategy may be multi-recommendation-index fusion parameters of a fusion formula used in the multi-recommendation-index recommendation. The fusion formula may be determined by technicians according to requirements or experience, or repeatedly determined by performing a large number of tests.

With reference to FIG. 4C which illustrates a structural diagram of a parameter optimization model, the parameter optimization model is a deep neural networks (DNN) model constructed based on the ES algorithm, and includes an input layer, a hidden layer, and an output layer. The input layer is used for inputting a scenario characteristic, a user basic characteristic and a user preference characteristic of a historical user, and inputting a recommendation reference characteristic including the scenario characteristic, user basic characteristic and user preference characteristic of the historical user into the hidden layer for processing. The hidden layer is used for processing each characteristic in the recommendation reference characteristic of the historical user. The output layer is used for determining recommendation strategy parameters of each resource recommendation model in the online recommendation system according to the output data of the hidden layer.

The scenario characteristic may include, but is not limited to, the number of refreshes, a refresh state, a refresh magnitude, a network state, and a refresh time period. The user basic characteristic may include, but is not limited to, user's gender, age, education background, user activation, a user historical liking proportion, and user resource preference. The user preference characteristic may include, but is not limited to, a degree of preference of the target user for different categories of resource content in different types of resources.

On the basis of FIGS. 4A to 4C, the resource recommendation method in the embodiment will be described in detail below.

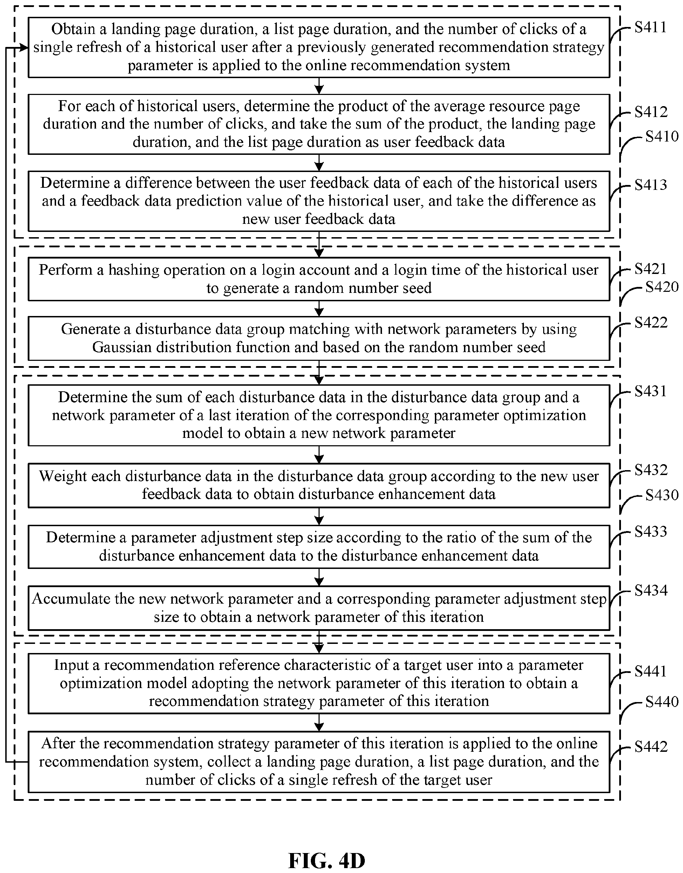

With reference to FIG. 4 which illustrates a resource recommendation method, the method includes the following stages:

S410: user feedback data determination stage;

S420: disturbance data generation stage;

S430: network parameter evolution stage; and

S440: resource recommendation stage.

For example, the user feedback data determination stage includes the steps described below.

In step S411, a landing page duration, a list page duration, and the number of clicks of a single refresh of a historical user are acquired after a previously generated recommendation strategy parameter is applied to the online recommendation system.

In step S412, for each of historical users, the product of an average resource page duration and the number of clicks is determined, and the sum of the product, the landing page duration, and the list page duration is taken as user feedback data.

Specifically, the user feedback data is determined according to the following formula:

$$\text{Reward} = \text{Sum (landing page duration} + \text{list page duration)} + \text{average resource page duration} * \text{number of clicks.}$$

In the formula, Reward is user feedback data corresponding to a single refresh of a feedback user in a current time period, Sum ( ) is the summation formula, and the average resource page duration is an average value of the total duration of resources recommended by the recommendation system all day in a previous day.

In step S413, a difference between the user feedback data of each of the historical users and a feedback data prediction value of the historical user is determined, and the difference is taken as new user feedback data.

The feedback data prediction value may be understood as a prediction result of predicting the user feedback in the current time period through the feedback data of the historical user in a historical time period.

Specifically, the user feedback data is updated according to the following formula:

$$\triangle \text{Reward} = \text{Reward} - \text{re\_base.}$$

In the formula, Reward is user feedback data of a feedback user in the current time period, re base is a feedback data prediction value of the feedback user in the current time period, and AReward is the updated user feedback data of the feedback user in the current time period.

For example, the disturbance data generation stage includes the steps described below.

In step S421, a hashing operation is performed on a login account and a login time of the historical user to generate a random number seed.

In step S422, a disturbance data group matching with network parameters is generated by using Gaussian distribution function and based on the random number seed.

The number of disturbance data contained in the disturbance data group is the same as the number of network parameters, and the network parameters are in one-to-one correspondence with the disturbance data.

For example, the network parameter evolution stage includes the steps described below.

In step S431, the sum of each of disturbance data in the disturbance data group and a network parameter of a last iteration of the corresponding parameter optimization model is determined to obtain a new network parameter.

For example, the new network parameter is determined by using the following formula:

$$w_i' = w_i + e_i.$$

In the formula, $w_i$ is an $i^{th}$ network parameter in the parameter optimization model, ei is disturbance data corresponding to the $i^{th}$ network parameter in the disturbance data group, and $w_i'$ is a new network parameter corresponding to the $i^{th}$ network parameter.

In step S432, each disturbance data in the disturbance data group is weighted according to the new user feedback data to obtain disturbance enhancement data.

For example, the disturbance enhancement data is determined by using the following formula:

$$Step\_list = append\ (e_i * \ \triangle Reward).$$

In the formula, Step list is an array formed by disturbance enhancement data, and the length of the array is the product of the number of disturbance data and the number of user feedback data. The number of user feedback data is the product of the number of historical users in the current time period and the number of refreshes.

In step S433, a parameter adjustment step size is determined according to the ratio of the sum of the disturbance enhancement data to the disturbance enhancement data.

For example, the parameter adjustment step size is determined by using the following formula:

$$Step = Sum\ (Step\_list)\ /\ len\ (Step\_list) * learning\_rate.$$

In the formula, Step is the determined parameter adjustment step size, len ( ) is an array length determination function, and learning rate is a learning rate whose numerical value is an empirical value.

In step S434, the new network parameter and a corresponding parameter adjustment step size are accumulated to obtain a network parameter of this iteration.

For example, the resource recommendation stage includes the steps described below.

In step S441, a recommendation reference characteristic of a target user is inputted into a parameter optimization model adopting the network parameter of this iteration to obtain a recommendation strategy parameter of this iteration.

The recommendation reference characteristic of the target user includes, but is not limited to, a scenario characteristic, a user basic characteristic, and a user preference characteristic. It is to be noted that in order to improve the matching degree between the resource recommendation result of the online recommendation system and the target user, the content contained in the recommendation reference characteristic of the target user used in the resource recommendation stage is the same as or corresponds to the content contained in the recommendation reference characteristic of the historical user used in the input layer of the parameter optimization model.

In step S442, after the recommendation strategy parameter of this iteration is applied to the online recommendation system, a landing page duration, a list page duration, and the number of clicks of a single refresh of the target user are collected. The process returns to step S411.

In the embodiment of the present application, the global combination optimization of all strategy parameters in all processing strategies in the recommendation system is achieved through online evolution learning, and the whole system has the same target, so that the matching degree between the finally determined strategy parameters and the recommendation system becomes better. In addition, when the strategy parameters are determined, scenario characteristics and user characteristics are introduced, which causes the recommendation model to have the capability of deeply personalized scenario adaptive recommendation.

It is to be noted that the resource recommendation method involved in the embodiments of the present application is also applicable to the case in which the resource processing is performed through another resource processing system, in which at least one resource processing stage is included, each of at least one resource processing stage adopts at least one processing strategy, and each of the at least one processing strategy includes at least one strategy parameter. The present application is illustrated by using an example of a resource recommendation method, which should not be construed as limiting the present application.

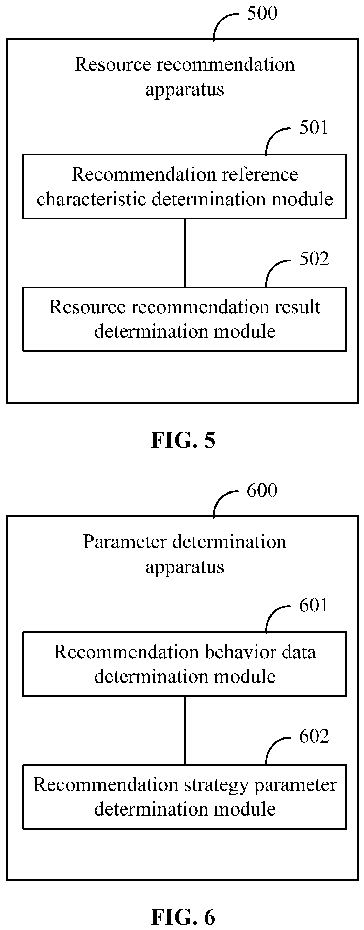

As the implementation of the preceding resource recommendation methods, the present application further provides an embodiment of a virtual apparatus for implementing the resource recommendation methods. Further, with reference to FIG. 5 which illustrates a structural diagram of a resource recommendation apparatus, the resource recommendation apparatus 500 includes a recommendation reference characteristic determination module 501 and a resource recommendation result determination module 502.

The recommendation reference characteristic determination module 501 is configured to determine a recommendation reference characteristic of a target user.

The resource recommendation result determination module 502 is configured to determine a resource recommendation result for the target user according to the recommendation reference characteristic of the target user and based on at least two resource recommendation models.

At least two recommendation strategy parameters in the at least two resource recommendation models are jointly determined according to recommendation behavior data of a historical user, and a resource processing stage associated with each of the at least two resource recommendation models is different.

In the embodiments of the present application, the recommendation reference characteristic determination module determines a recommendation reference characteristic of a target user, and the resource recommendation result determination module determines a resource recommendation result for the target user according to the recommendation reference characteristic of the target user and based on at least two resource recommendation models. At least two recommendation strategy parameters in the at least two resource recommendation models are jointly determined according to recommendation behavior data of a historical user, and a resource processing stage associated with each of the at least two resource recommendation models is different. In the preceding technical scheme, at least two recommendation strategy parameters in at least two resource recommendation models are jointly determined, dynamic determination and automatic adjustment of each recommendation strategy parameter in different resource processing stages can be achieved, and the problem of poor resource recommendation results caused by inaccuracy of artificially set parameters can be avoided. Meanwhile, with the joint determination of recommendation strategy parameters, the problem of the mismatching of recommendation strategy parameters caused by the isolated determination of a single strategy parameter can be avoided, thereby giving consideration to the interaction between recommendation strategy parameters, further improving the accuracy of the resource recommendation result and the matching degree between the resource recommendation result and the target user, and improving the user satisfaction.

Further, the recommendation behavior data of the historical user includes a recommendation reference characteristic of the historical user and user feedback data of the historical user.

The user feedback data is used for adjusting a network parameter in a parameter optimization model, and the parameter optimization model is implemented based on an evolution strategy algorithm.

The recommendation strategy parameters are determined based on the adjusted parameter optimization model and according to the recommendation reference characteristic of the historical user.

Further, the apparatus further includes a user feedback data determination module, which is configured to determine the user feedback data.

The user feedback data determination module specifically includes a response behavior data statistical value determination unit and a user feedback data determination unit.

The response behavior data statistical value determination unit is configured to determine a response behavior data statistical value of the historical user to a historical resource recommendation result under each of traffic indexes, where the traffic indexes are indexes used by the resource recommendation models.

The user feedback data determination unit is configured to determine the user feedback data according to the response behavior data statistical value under each of the traffic indexes.

Further, the traffic indexes include a time response index and/or an interaction response index.

The user feedback data determination unit includes a total resource response duration determination sub-unit, a duration suppression amount determination sub-unit, and a user feedback data determination sub-unit.

The total resource response duration determination sub-unit is configured to determine a total resource response duration according to a response behavior data statistical value under the time response index.

The duration suppression amount determination sub-unit is configured to determine a duration correction amount according to a response behavior data statistical value under the interaction response index and a historical response duration.

The user feedback data determination sub-unit is configured to determine the user feedback data of the historical user according to the total resource response duration; or determine the user feedback data of the historical user according to the duration correction amount and the total resource response duration.

Further, the recommendation strategy includes at least one of a resource category proportion strategy, a resource content diversification strategy or a multi-recommendation-index equilibrium strategy.

The recommendation strategy parameters include at least one of a category proportion parameter, a diversification weight adjustment parameter or a multi-recommendation-index fusion parameter.

Further, the resource processing stages include at least two of a resource recall stage, a resource rough arrangement stage, a resource fine arrangement stage or a resource rearrangement stage.

The resource recommendation models include at least two of a resource recall model, a resource rough arrangement model, a resource fine arrangement model or a resource rearrangement model.

Further, the recommendation reference characteristic includes at least one of a scenario characteristic, a user basic characteristic or a user preference characteristic.

The preceding resource recommendation apparatus may perform the resource recommendation method according to any embodiment of the present disclosure and has function modules and beneficial effects corresponding to the execution of the resource recommendation method.

As the implementation of the preceding parameter determination methods, the present application further provides an embodiment of a virtual apparatus for implementing the parameter determination methods. Further, with reference to FIG. 6 which illustrates a structural diagram of a parameter determination apparatus, the parameter determination apparatus 600 includes a recommendation behavior data determination module 601 and a recommendation strategy parameter determination module 602.

The recommendation behavior data determination module 601 is configured to determine recommendation behavior data of a historical user.

The recommendation strategy parameter determination module 602 is configured to jointly determine at least two recommendation strategy parameters according to the recommendation behavior data of the historical user.

The at least two recommendation strategy parameters are use parameters in at least two resource recommendation models, and a resource processing stage associated with each of the at least two resource recommendation models is different.

In the embodiment of the present application, the recommendation behavior data determination module determines recommendation behavior data of a historical user, and the recommendation strategy parameter determination module jointly determines at least two recommendation strategy parameters according to the recommendation behavior data of the historical user, where the at least two recommendation strategy parameters are use parameters in at least two resource recommendation models, and a resource processing stage associated with each of the at least two resource recommendation models is different. In the preceding technical scheme, at least two recommendation strategy parameters in at least two resource recommendation models are jointly determined, so that dynamic determination and automatic adjustment of each recommendation strategy parameter in different resource processing stages can be achieved, and the problem of poor resource recommendation results caused by inaccuracy of artificially set parameters can be avoided. Meanwhile, with the joint determination of recommendation strategy parameters, the problem of the mismatching of recommendation strategy parameters caused by the isolated determination of a single strategy parameter can be avoided, thereby giving consideration to the interaction between recommendation strategy parameters, further improving the accuracy of the resource recommendation result and the matching degree between the resource recommendation result and the target user, and improving the user satisfaction.

Further, the recommendation behavior data of the historical user includes a recommendation reference characteristic of the historical user and user feedback data of the historical user.

The recommendation strategy parameter determination module 602 includes a network parameter adjustment unit and a recommendation strategy parameter obtaining unit.

The network parameter adjustment unit is configured to adjust a network parameter in a parameter optimization model according to the user feedback data, where the parameter optimization model is implemented based on an evolution strategy algorithm.

The recommendation strategy parameter obtaining unit is configured to input the recommendation reference characteristic of the historical user into the adjusted parameter optimization model to obtain at least two recommendation strategy parameters.

Further, the network parameter adjustment unit includes a disturbance data group generation sub-unit, a parameter adjustment step size determination sub-unit, and a network parameter adjustment sub-unit.

The disturbance data group generation sub-unit is configured to generate a disturbance data group according to account information of the historical user and time information of the historical user.

The parameter adjustment step size determination sub-unit is configured to determine a parameter adjustment step size according to the user feedback data and the disturbance data group.

The network parameter adjustment sub-unit is configured to adjust the network parameter in the parameter optimization model according to the parameter adjustment step size.

**EP 3 905 069 A2**

Further, the parameter adjustment step size determination sub-unit includes a disturbance enhancement data obtaining slave unit and a parameter adjustment step size determination slave unit.

The disturbance enhancement data obtaining slave unit is configured to weight each disturbance data in the disturbance data group according to the user feedback data to obtain disturbance enhancement data.

The parameter adjustment step size determination slave unit is configured to determine the parameter adjustment step size according to the disturbance enhancement data.

Further, the disturbance enhancement data obtaining slave unit includes a user feedback data update sub-slave unit and a disturbance enhancement data obtaining sub-slave unit.

The user feedback data update sub-slave unit is configured to standardize the user feedback data according to historical feedback data of the historical user to update the user feedback data.

The disturbance enhancement data obtaining sub-slave unit is configured to weight each disturbance data in the disturbance data group according to the updated user feedback data to obtain the disturbance enhancement data.

Further, the apparatus further includes a user feedback data determination module, which is configured to determine the user feedback data.

The user feedback data determination module specifically includes a response behavior data statistical value determination unit and a user feedback data determination unit.

The response behavior data statistical value determination unit is configured to determine a response behavior data statistical value of the historical user to a historical resource recommendation result under each of traffic indexes; where the traffic indexes are indexes used by the resource recommendation models.

The user feedback data determination unit is configured to determine the user feedback data according to the response behavior data statistical value under each of the traffic indexes.

Further, the traffic indexes include a time response index and/or an interaction response index.

The user feedback data determination unit includes a total resource response duration determination sub-unit, a duration suppression amount determination sub-unit, and a user feedback data determination sub-unit.

The total resource response duration determination sub-unit is configured to determine a total resource response duration according to a response behavior data statistical value under the time response index.

The duration suppression amount determination sub-unit is configured to determine a duration correction amount according to a response behavior data statistical value under the interaction response index and a historical response duration.

The user feedback data determination sub-unit is configured to determine user feedback data of each of historical users according to the total resource response duration; or determine user feedback data of each of historical users according to the duration correction amount and the total resource response duration.

Further, the recommendation strategy includes at least one of a resource category proportion strategy, a resource content diversification strategy or a multi-recommendation-index equilibrium strategy.

The recommendation strategy parameters include at least one of a category proportion parameter, a diversification weight adjustment parameter or a multi-recommendation-index fusion parameter.

Further, the recommendation reference characteristic includes at least one of a scenario characteristic, a user basic characteristic or a user preference characteristic.

The preceding parameter determination apparatus may perform the parameter determination method according to any embodiment of the present disclosure and has function modules and beneficial effects corresponding to the execution of the parameter determination method.

According to the embodiments of the present application, the present application further provides an electronic device and a readable storage medium.

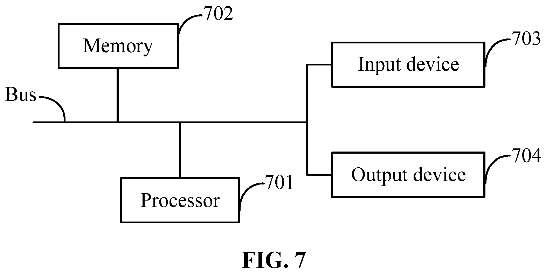

FIG. 7 is a block diagram of an electronic device for implementing the resource recommendation method and/or the parameter determination method in the embodiment of the present application. The electronic device is intended to represent various forms of digital computer, for example, a laptop computer, a desktop computer, a worktable, a personal digital assistant, a server, a blade server, a mainframe computer or another applicable computer. The electronic device may also represent various forms of mobile device, for example, a personal digital assistant, a cellphone, a smartphone, a wearable device or another similar computing device. Herein the shown components, the connections and relationships between these components, and the functions of these components are illustrative only and are not intended to limit the implementation of the present application as described and/or claimed herein.

As shown in FIG. 7, the electronic device includes one or more processors 701, a memory 702, and interfaces for connecting various components, including a high-speed interface and a low-speed interface. The various components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output device (for example, a display device coupled to an interface). In other implementations, if required, multiple processors and/or multiple buses may be used with multiple memories. Similarly, multiple electronic devices can be connected,

21

each providing some necessary operations (for example, serving as a server array, a set of blade servers or a multi-processor system). FIG. 7 shows one processor 701 by way of example.

The memory 702 is a non-transitory computer-readable storage medium provided in the present application. The memory has instructions executable by at least one processor stored thereon to cause the at least one processor to perform the resource recommendation method and/or the parameter determination method provided in the present application. The non-transitory computer-readable storage medium of the present application stores computer instructions for causing a computer to perform the resource recommendation method and/or the parameter determination method provided in the present application.

The memory 702 as a non-transitory computer-readable storage medium is configured to store a non-transitory software program, a non-transitory computer-executable program and modules, for example, program instructions/modules (for example, the recommendation reference characteristic determination module 501 and the resource recommendation result determination module 502 shown in FIG. 5) corresponding to the resource recommendation method provided in the embodiments of the present application, or program instructions/modules (for example, the recommendation behavior data determination module 601 and the recommendation strategy parameter determination module 602 shown in FIG. 6) corresponding to the parameter determination method provided in the embodiments of the present application. The processor 701 executes non-transitory software programs, instructions and modules stored in the memory 702 to execute various function applications and data processing of a server, that is, implement the resource recommendation method and/or the parameter determination method in the preceding method embodiments.

The memory 702 may include a program storage region and a data storage region. The program storage region may store an operating system and an application program required by at least one function. The data storage region may store data created based on the use of the electronic device for performing the resource recommendation method and/or the parameter determination method. Additionally, the memory 702 may include a high-speed random-access memory and may further include a non-transient memory, for example, at least one disk memory, a flash memory or another non-transient solid-state memory. In some embodiments, the memory 702 optionally includes memories disposed remote from the processor 701, and these remote memories may be connected, through a network, to the electronic device for performing the resource recommendation method and/or the parameter determination method. Examples of the preceding network include, but are not limited to, the Internet, an intranet, a local area network, a mobile communication network and a combination thereof.

The electronic device for performing the resource recommendation method and/or the parameter determination method may further include an input device 703 and an output device 704. The processor 701, the memory 702, the input device 703, and the output device 704 may be connected by a bus or in other manners. FIG. 7 uses connection by a bus as an example.

The input device 703 may receive input number or character information and generate key signal input related to user settings and function control of the electronic device for performing the resource recommendation method and/or the parameter determination method. The input device 703 may be, for example, a touchscreen, a keypad, a mouse, a trackpad, a touchpad, a pointing stick, one or more mouse buttons, a trackball or a joystick. The output device 704 may include, for example, a display device, an auxiliary lighting device (for example, a light-emitting diode (LED)) or a haptic feedback device (for example, a vibration motor). The display device may include, but is not limited to, a liquid-crystal display (LCD), an LED display, and a plasma display. In some embodiments, the display device may be a touchscreen.

Various implementations of the systems and techniques described herein may be implemented in digital electronic circuitry, integrated circuitry, an application-specific integrated circuit (ASIC), computer hardware, firmware, software and/or a combination thereof. The various implementations may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device and at least one output device and transmitting data and instructions to the memory system, the at least one input device and the at least one output device.

These computing programs (also referred to as programs, software, software applications or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device and/or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used in providing machine instructions and/or data for a programmable processor.

In order to provide interaction with a user, the systems and techniques described herein may be implemented on a computer. The computer has a display device (for example, a cathode-ray tube (CRT) or an LCD monitor) for displaying information to the user and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system (for example, a data server) including a back-end component, a computing system (for example, an application server) including a middleware component, a computing system (for example, a user computer having a graphical user interface or a web browser through which a user can interact with implementations of the systems and techniques described herein) including a front-end component or a computing system including any combination of such back-end, middleware or front-end components. Components of a system may be interconnected by any form or medium of digital data communication (for example, a communication network). Examples of the communication network include a local area network (LAN), a wide area network (WAN), the Internet, and a blockchain network.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server service.

In the preceding technical schemes of the embodiments of the present application, at least two recommendation strategy parameters in at least two resource recommendation models are jointly determined, so that dynamic determination and automatic adjustment of each recommendation strategy parameter in different resource processing stages can be achieved, and the problem of poor resource recommendation results caused by inaccuracy of artificially set parameters can be avoided. Meanwhile, with the joint determination of recommendation strategy parameters, the problem of the mismatching of recommendation strategy parameters caused by the isolated determination of a single strategy parameter can be avoided, thereby giving consideration to the interaction between recommendation strategy parameters, further improving the accuracy of the resource recommendation result and the matching degree between the resource recommendation result and the target user, and improving the user satisfaction.

It is to be understood that various forms of the preceding flows may be used, with steps reordered, added or removed. For example, the steps described in the present application may be executed in parallel, in sequence or in a different order as long as the desired results of the technical schemes disclosed in the present application are achieved. The execution sequence of these steps is not limited herein.

The scope of the present application is not limited to the preceding specific implementations. It is to be understood by those skilled in the art that various modifications, combinations, sub-combinations and substitutions may be made depending on design requirements and other factors. Any modification, equivalent substitution, improvement and the like made within the spirit and principle of the present application is within the scope of the present application.

**Claims**

1. A resource recommendation method, comprising:

   determining (S101) a recommendation reference characteristic of a target user; and
   determining (SI02) a resource recommendation result for the target user according to the recommendation reference characteristic of the target user and based on at least two resource recommendation models;
   wherein at least two recommendation strategy parameters in the at least two resource recommendation models are jointly determined according to recommendation behavior data of a historical user, and a resource processing stage associated with each of the at least two resource recommendation models is different.

2. The method according to claim 1, wherein the recommendation behavior data of the historical user comprises a recommendation reference characteristic of the historical user and user feedback data of the historical user, wherein the user feedback data is used for adjusting a network parameter in a parameter optimization model, and the parameter optimization model is implemented based on an evolution strategy algorithm; and
   wherein the at least two recommendation strategy parameters are determined based on the adjusted parameter optimization model and according to the recommendation reference characteristic of the historical user.

3. The method according to claim 2, wherein the user feedback data is determined in the following manner:

   determining a response behavior data statistical value of the historical user to a historical resource recommendation result under each of traffic indexes, wherein the traffic indexes are indexes used by the at least two resource recommendation models; and

determining the user feedback data according to the response behavior data statistical value under each of the traffic indexes;

wherein the traffic indexes comprise a time response index and/or an interaction response index; and

wherein determining the user feedback data according to the response behavior data statistical value under the each of the traffic indexes comprises:

determining a total resource response duration according to a response behavior data statistical value under the time response index;

determining a duration correction amount according to a response behavior data statistical value under the interaction response index and a historical response duration; and

determining user feedback data of each of historical users according to the total resource response duration; or determining user feedback data of each of historical users according to the duration correction amount and the total resource response duration.

4. The method according to any one of claims 1 to 3, wherein a recommendation strategy used in each of the at least two resource recommendation models comprises at least one of a resource category proportion strategy, a resource content diversification strategy, or a multi-recommendation-index equilibrium strategy; and

each of the at least two recommendation strategy parameters comprises at least one of a category proportion parameter, a diversification weight adjustment parameter, or a multi-recommendation-index fusion parameter.

5. The method according to any one of claims 1 to 3, wherein resource processing stages associated with the at least two resource recommendation models comprise at least two of a resource recall stage, a resource rough arrangement stage, a resource fine arrangement stage, or a resource rearrangement stage; and

the at least two resource recommendation models comprise at least two of a resource recall model, a resource rough arrangement model, a resource fine arrangement model, or a resource rearrangement model.

6. The method according to any one of claims 1 to 3, wherein the recommendation reference characteristic comprises at least one of a scenario characteristic, a user basic characteristic, or a user preference characteristic.

7. A parameter determination method, comprising:

determining (S201) recommendation behavior data of a historical user; and

jointly determining (S202) at least two recommendation strategy parameters according to the recommendation behavior data of the historical user;

wherein the at least two recommendation strategy parameters are use parameters in at least two resource recommendation models, and a resource processing stage associated with each of the at least two resource recommendation models is different.

8. The method according to claim 7, wherein the recommendation behavior data of the historical user comprises a recommendation reference characteristic of the historical user and user feedback data of the historical user;

wherein jointly determining the at least two recommendation strategy parameters according to the recommendation behavior data of the historical user comprises:

adjusting a network parameter in a parameter optimization model according to the user feedback data, wherein the parameter optimization model is implemented based on an evolution strategy algorithm; and inputting the recommendation reference characteristic of the historical user into the adjusted parameter optimization model to obtain the at least two recommendation strategy parameters;

wherein adjusting the network parameter in the parameter optimization model according to the user feedback data comprises:

generating a disturbance data group according to account information of the historical user and time information of the historical user;

determining a parameter adjustment step size according to the user feedback data and the disturbance data group; and

adjusting the network parameter in the parameter optimization model according to the parameter adjustment step size;

wherein determining the parameter adjustment step size according to the user feedback data and the disturbance data group comprises:

weighting each disturbance data in the disturbance data group according to the user feedback data to obtain disturbance enhancement data; and
determining the parameter adjustment step size according to the disturbance enhancement data; and

wherein weighting the each disturbance data in the disturbance data group according to the user feedback data to obtain the disturbance enhancement data comprises:

standardizing the user feedback data according to historical feedback data of the historical user to update the user feedback data; and
weighting each disturbance data in the disturbance data group according to the updated user feedback data to obtain the disturbance enhancement data.

9. The method according to claim 8, wherein the user feedback data is determined in the following manner:

determining a response behavior data statistical value of the historical user to a historical resource recommendation result under each of traffic indexes, wherein the traffic indexes are indexes used by the at least two resource recommendation models; and
determining the user feedback data according to the response behavior data statistical value under each of the traffic indexes;
wherein the traffic indexes comprise a time response index and/or an interaction response index; and
wherein determining the user feedback data according to the response behavior data statistical value under the each of the traffic indexes comprises:

determining a total resource response duration according to a response behavior data statistical value under the time response index;
determining a duration correction amount according to a response behavior data statistical value under the interaction response index and a historical response duration; and
determining user feedback data of each of historical users according to the total resource response duration; or determining user feedback data of each of historical users according to the duration correction amount and the total resource response duration.

10. The method according to claim 7 or 8, wherein a recommendation strategy used in each of the at least two resource recommendation models comprises at least one of a resource category proportion strategy, a resource content diversification strategy, or a multi-recommendation-index equilibrium strategy; and
each of the at least two recommendation strategy parameters comprises at least one of a category proportion parameter, a diversification weight adjustment parameter, or a multi-recommendation-index fusion parameter.

11. The method according to claim 8, wherein the recommendation reference characteristic comprises at least one of a scenario characteristic, a user basic characteristic, or a user preference characteristic.

12. A resource recommendation apparatus, comprising:

a recommendation reference characteristic determination module, which is configured to determine a recommendation reference characteristic of a target user; and
a resource recommendation result determination module, which is configured to determine a resource recommendation result for the target user according to the recommendation reference characteristic of the target user and based on at least two resource recommendation models;
wherein at least two recommendation strategy parameters in the at least two resource recommendation models are jointly determined according to recommendation behavior data of a historical user, and a resource processing stage associated with each of the at least two resource recommendation models is different.

13. A parameter determination apparatus, comprising:

a recommendation behavior data determination module, which is configured to determine recommendation behavior data of a historical user; and

a recommendation strategy parameter determination module, which is configured to jointly determine at least two recommendation strategy parameters according to the recommendation behavior data of the historical user; wherein the at least two recommendation strategy parameters are use parameters in at least two resource recommendation models, and a resource processing stage associated with each of the at least two resource recommendation models is different.

14. An electronic device, comprising:

at least one processor; and

a memory communicatively connected to the at least one processor; wherein

the memory has instructions executable by the at least one processor stored thereon, and the instructions are executed by the at least one processor to cause the at least one processor to perform the resource recommendation method according to any one of claims 1 to 6 and/or to perform the parameter determination method according to any one of claims 7 to 11.

15. A non-transitory computer-readable storage medium having computer instructions stored thereon, wherein the computer instructions are used for causing a computer to perform the resource recommendation method according to any one of claims 1 to 6 and/or to perform the parameter determination method according to any one of claims 7 to 11.

Determine a recommendation reference characteristic of a target user ─S101

Determine a resource recommendation result for the target user according to the recommendation reference characteristic of the target user and based on at least two resource recommendation models, where at least two recommendation strategy parameters in the at least two resource recommendation models are jointly determined according to recommendation behavior data of a historical user, and a resource processing stage associated with each of the at least two resource recommendation models is different ─S102

**FIG. 1**

Determine recommendation behavior data of a historical user ─S201

Jointly determine at least two recommendation strategy parameters according to the recommendation behavior data of the historical user, where the at least two recommendation strategy parameters are use parameters in at least two resource recommendation models, and a resource processing stage associated with each of the at least two resource recommendation models is different ─S202

**FIG. 2**

S301

Determine a recommendation reference characteristic of a historical user and user feedback data of the historical user

S302

Adjust a network parameter in a parameter optimization model according to the user feedback data

S303

Input the recommendation reference characteristic of the historical user into the adjusted parameter optimization model to obtain the at least two recommendation strategy parameters, where the at least two recommendation strategy parameters are use parameters in at least two resource recommendation models, and a resource processing stage associated with each of the at least two resource recommendation models is different

**FIG. 3**

Target user ⟹ Historical user

Resource recommendation result

User feedback data

Online recommendation system — 100

Online evolution system — 200

Recommendation strategy parameter

**FIG. 4A**

Resource rearrangement stage

Resource fine arrangement stage

Resource rough arrangement stage

Resource recall stage

**FIG. 4B**

Recommendation
strategy parameter

Output layer

Hidden layer

Input layer

Scenario
characteristic

User basic
characteristic

User preference
characteristic

**FIG. 4C**

Obtain a landing page duration, a list page duration, and the number of clicks of a single refresh of a historical user after a previously generated recommendation strategy parameter is applied to the online recommendation system — S411

For each of historical users, determine the product of the average resource page duration and the number of clicks, and take the sum of the product, the landing page duration, and the list page duration as user feedback data — S412

— S410

Determine a difference between the user feedback data of each of the historical users and a feedback data prediction value of the historical user, and take the difference as new user feedback data — S413

Perform a hashing operation on a login account and a login time of the historical user to generate a random number seed — S421

— S420

Generate a disturbance data group matching with network parameters by using Gaussian distribution function and based on the random number seed — S422

Determine the sum of each disturbance data in the disturbance data group and a network parameter of a last iteration of the corresponding parameter optimization model to obtain a new network parameter — S431

Weight each disturbance data in the disturbance data group according to the new user feedback data to obtain disturbance enhancement data — S432

— S430

Determine a parameter adjustment step size according to the ratio of the sum of the disturbance enhancement data to the disturbance enhancement data — S433

Accumulate the new network parameter and a corresponding parameter adjustment step size to obtain a network parameter of this iteration — S434

Input a recommendation reference characteristic of a target user into a parameter optimization model adopting the network parameter of this iteration to obtain a recommendation strategy parameter of this iteration — S441

— S440

After the recommendation strategy parameter of this iteration is applied to the online recommendation system, collect a landing page duration, a list page duration, and the number of clicks of a single refresh of the target user — S442

**FIG. 4D**

500

**Resource recommendation apparatus**

501

**Recommendation reference characteristic determination module**

502

**Resource recommendation result determination module**

**FIG. 5**

600

**Parameter determination apparatus**

601

**Recommendation behavior data determination module**

602

**Recommendation strategy parameter determination module**

**FIG. 6**

**FIG. 7**